# EUROPÄISCHE PATENTSCHRIFT

(11) **EP 1 494 803 B1**
(45) Veröffentlichungstag und Bekanntmachung des Hinweises auf die Patenterteilung: **16.04.2008**
(21) Anmeldenummer: 03720444.3
(22) Anmeldetag: 10.04.2003
(51) Int. Cl.: B01J 19/12, B01D 53/00, C02F 1/72, C02F 1/32

(54) **REAKTOR UND VERFAHREN ZUR BEHANDLUNG VON FLUIDEN MIT HILFE VON PHOTOKATALYSATOREN, WELCHE MIT PHOSPHORESZIERENDEN FESTSTOFFEN GEKOPPELT SIND**
REACTOR AND METHOD FOR TREATING FLUIDS BY USING PHOTOCATALYSTS COUPLED WITH PHOSPHORESCENT SOLIDS
REACTEUR ET PROCEDE POUR TRAITER DES FLUIDES AU MOYEN DE PHOTOCATALYSEURS COUPLES A DES MATIERES SOLIDES PHOSPHORESCENTES

(30) Priorität: 13.04.2002 DE 10216477
(43) Veröffentlichungstag der Anmeldung: 12.01.2005
(73) Patentinhaber: Liedy, Werner, 67126 Hochdorf-Assenheim 1 (DE)
(72) Erfinder: Liedy, Werner, 67126 Hochdorf-Assenheim 1 (DE)
(74) Vertreter: Wagner, Jutta
(86) Internationale Anmeldenummer: PCT/EP2003/003706
(87) Internationale Veröffentlichungsnummer: WO 2003/086618

(56) Entgegenhaltungen:
- WO-A-00/61719
- DE-A- 19 521 119
- DE-A- 19 746 343
- DE-A- 19 926 980
- DE-A- 19 934 436
- US-B1- 6 214 176
- US-B1- 6 287 993

## Beschreibung

### Beschreibung des Standes der Technik

Die Photokatalyse ist ein Effekt der auftritt, wenn ein elektrischer Halbleiter mit reaktionsfähigen Substanzen in Kontakt gebracht wird. Durch die Bestrahlung werden dann Elektronen in ein energetisch höheres Leitungsband promoviert. Zurück bleibt ein "Loch". Das angeregte Elektron und/oder das Loch können mit Molekülen oder Radikalen an der Oberfläche des Halbleiters, z.B. Redoxreaktionen, eingehen. So gelingt es in Anwesenheit von Sauerstoff, die meisten organischen Moleküle, Bakterien und Viren vollständig zu oxidieren.

Es gibt bereits Anwendungen für die Reinigung von Wasser und Gasen (Bahnemann, Detlef: "Photocatalytic Detoxifikation of Polluted Waters", in the Handbook of Enviromental Chemistry, O. Hutzinger (Hrg.) Vol. 2.: Reactions and Processes, Part L: Enviromental Photochemistry, P. Boule (Ed.), Springer Verlag Heidelberg 1999, 285-351). Der am häufigsten eingesetzte Photokatalysator ist TiO₂. Mit einer Energielücke von 3,2 eV kann er mit ultraviolettem Licht mit einer Wellenlänge kleiner als 385 nm aktiviert werden. Es existieren aber auch viele andere Photokatalysatoren mit teilweise tiefer liegender Energielücke. Diese lassen sich mit Licht größerer Wellenlänge aktivieren. Es wurde in jüngster Zeit an der Entwicklung von Photokatalysatoren mit den unterschiedlichsten Eigenschaften gearbeitet. Insbesondere sind in diesem Zusammenhang als Energieanreger der Bereich des sichtbaren Lichts (Lettmann, Christian: "Konventionelle und kombinatorische Entwicklung von Mischoxiden zur photokatalytischen Wasserreinigung mit sichtbarem Licht", Diss. Univ. des Saarlandes, 2001) und die Verwendung von Sonnenlicht (EP 0 812 619 A1) zu erwähnen.

In der Literatur sind verschiedene Reaktorbauarten beschrieben.

Weit verbreitet ist der "Stegmehrfachplattenreaktor", bei dem das zu behandelte Fluid mäanderförmig über eine mit Photokatalysator beschichtete Fläche strömt (EP 0 738 686 A1). Der Katalysator wird durch das Fluid hindurch bestrahlt, wozu im beschriebenen Fall einer Abwasserreinigung Sonnenlicht als Anreger und TiO₂ als Katalysator beschrieben ist. Als Variante wird beschrieben, den Katalysator in dem Fluid zu suspendieren und nach Durchlauf der Vorrichtung wieder abzutrennen.
Diese Apparate haben einen extrem hohen Platzbedarf.

Es sind Kartuschen beschrieben, die den Katalysator enthalten und vom zu behandelnden Fluid durchströmt werden. Die Beleuchtung erfolgt mit Lampen, die seitlich an den Kartuschen angebracht sind (WO 96/36565). Dieser Apparat hat einen vergleichbar hohen Platzbedarf wie der "Stegmehrfachplattenreaktor".

Der "Kugelhaufenreaktor" besteht aus Glaskugeln, die mit Katalysator beschichtet sind und durch deren Zwischenräume das Fluid fließt (WO 95/11751). Die Bestrahlung erfolgt durch Lampen, die in die Schüttung eingebracht sind. Häufigste Anwendung als Festbett, aber auch als Wirbelbett. Nachteil ist, dass eine erhöhte Packungsdichte mit nur geringen Eindringtiefen der Strahlung erkauft werden muss.

In Suspensionsreaktoren wird ein feinteilig suspendierter Katalysator mit verschiedenartig angeordneten Lampen bestrahlt (EP 0 233 498 B1). Bedingt durch die starke Abschattung durch andere Katalysator- oder Reagenzpartikel wird jeweils nur ein sehr kleiner Teil der vorhandenen Katalysatoroberfläche aktiviert, falls nicht mit stark verdünnten Katalysatorlösungen und entsprechend geringer Umsetzung gearbeitet wird.

Es sind Anordnungen beschrieben, bei denen das Licht durch Glasplatten zum Photokatalysator transportiert wird (WO 97/37936). Platzbedarf und komplexe Bauweise entsprechen den vorstehend beschriebenen Stegplattenreaktoren.

In WO 98/17390 ist eine Anordnung mit vielen dünnen Glasplättchen ist beschrieben. Sie tragen den Katalysator auf ihrer Oberfläche. Die Bestrahlung erfolgt durch Lampen, die den ringförmig angeordneten Stapel von Glasplatten mittels Aussparungen in den Glasplatten durchdringen. Die Bauweise ist sehr filigran und kompliziert.

### Nachteile des Standes der Technik und daraus resultierende Erfordernisse

Allen bekannten Reaktorbauarten ist gemein, dass sie eine nur sehr geringe Packungsdichte der bestrahlten Katalysatoroberfläche erreichen. Dies macht die Apparate teuer. Außerdem haben sie oft einen erheblichen Platzbedarf, der ebenfalls die Anwendung verteuert.
Die etwas kompakteren bekannten Bauarten sind sehr filigran und kompliziert gebaut und daher entsprechend teuer.

In diesen Umständen liegt der eigentliche Grund, aus dem sich die Photokatalyse großtechnisch bislang nicht durchgesetzt hat.

Es stellte sich daher die Aufgabe, ein Verfahren und Vorrichtungen zu entwickeln, die eine möglichst hohe Packungsdichte der bestrahlten Katalysatoroberfläche mit einer möglichst kostengünstigen Bau- und Betriebsweise verbinden.

Diese Aufgabe wird durch die Merkmale der Hauptansprüche gelöst und durch die der Unteransprüche gefördert.

### Transport der Energie durch phosphoreszierende Stoffe

Die Erfindung beruht auf dem neuartigen Prinzip die notwendige Energie durch phosphoreszierende Stoffe in die Nähe der photokatalytisch aktiven Oberfläche (im folgenden Photokatalysator **PK** genannt) zu transportieren, wo die phosphoreszierenden Partikel Licht geeigneter Wellenlänge abstrahlen und die PK aktivieren.
Die phosphoreszierenden Partikel (im folgenden Mikro-Radiatoren **MR** genannt) müssen an einer geeigneten Lichtquelle "aufgeladen" werden. Sie werden dann zur photokatalytisch aktiven Schicht transportiert, wo sie ihre gespeicherte elektromagnetische Energie ganz oder teilweise abgeben, um dann wieder zur UV-Lichtquelle zu gelangen. usw.
Dies hat den Vorteil, dass, bei Auswahl geeigneter MR, die gespeicherte Energie mit einer Halbwertszeit von einigen Sekunden bis Minuten im Inneren des Reaktionsraums an die PK weitergegeben wird, wo diese ihre Katalysatorwirkung aus-. üben können, während aufgrund der kurzen Halbwertszeiten des aktiven Zustands der PK diese sonst nur in der Nähe der Energiequelle reagieren.

Als Reaktoren kommen verschiedene Reaktortypen, die für Reaktionen und/oder für Stofftransportprozesse eingesetzt werden können, in Frage, vorzugsweise:
- Wirbelbett, Wirbelbettkaskade, Wirbelrinne
- Spouted Bed, Kaskade aus Spouted Beds
- Schlaufenreaktor, Kaskade aus Schlaufenreaktoren
- Rührkessel, Rührkesselkaskade
- Rohrreaktor
- Festbett (mit PK beschichtet) oder alle offenen, geordneten Strukturen wie Plättchen, Waben usw.

Bei all diesen Verfahren werden die MR an einer Lichtquelle aktiviert, physikalisch mit der Reaktionslösung und den PK vermischt, nach Abgabe der Energie an die PK zur Lichtquelle zurückgeführt, "aufgeladen" und erneut dem Katalysator zugeführt.

Die Vermischung kann zum einen durch Strömungen und Partikeldiffusion im Apparat erfolgen. Sind diese Transportmechanismen ausreichend, so kann die Lichtquelle z.B. eine UV-Lampe(n) direkt an der Wand des Apparats oder im Apparat installiert sein, wodurch die in der Nähe vorbeifließenden MR mit hoher Energiedichte aufgeladen werden, um dann durch die Strömung wieder ins Innere d es Reaktors zu gelangen.

Zusätzlich können durch Leitbleche, Prallbleche, Rührwerke usw. diese Transportmechanismen verbessert werden.

Alternativ oder zusätzlich kann der MR über einen externen Kreislauf an geeigneten Lampen vorbeigeführt werden. Hierzu wird vorzugsweise der MR vom zu behandelnden Fluid und vom PK abgetrennt, um seine Konzentration an der Lichtquelle zu erhöhen und Abschattungen durch PK- und Substratpartikel zu vermeiden. Vorzugsweise wird dabei der MR mit einer geringen Menge des zu behandelnden Fluids konvektiv transportiert.

Der am häufigsten eingesetzte Photokatalysator ist TiO₂. Mit einer Energielücke von 3,2 eV kann er mit ultraviolettem Licht mit einer Wellenlänge kleiner als 385 nm aktiviert werden. Es sind aber auch viele andere Photokatalysatoren bekannt, die sich mit Licht größerer Wellenlänge als 385 nm aktivieren lassen. Als Beispiele seien hier genannt ZnO und die Oxide anderer Übergangselemente (WO 95/11751) sowie CdS [EP 0 234 875 B1) und SnO₂, SrTiO₃, WO₃, Fe₂O₃ (WO 96/36565). Die Reihe der Beispiele ließe sich noch weiter fortsetzen.
In jüngster Zeit wurden Photokatalysatoren für den Bereich des sichtbaren Lichts (Lettmann, Christian: "Konventionelle und kombinatorische Entwicklung von Mischoxiden zur photokatalytischen Wasserreinigung mit sichtbarem Licht", Diss. Univ. des Saarlandes, 2001) und für die Verwendung von Sonnenlicht (EP 0 812 619 A1) entwickelt.

Vorzugsweise werden relativ harte und abriebfeste PK verwendet, wobei anorganische Stoffe, die nicht oxidiert werden, bevorzugt sind. Je nach Einsatzart kann der PK sehr unterschiedliche Partikelgrößen und Strukturen aufweisen.
- Suspensionskatalysatoren:: Partikeldurchmesser: 1 nm bis 100 µm
- Wirbelbettreaktor:: Partikeldurchmesser: 1 µm bis 1 mm

Bei Verwendung von Festbetten (oder allen Reaktoren mit geordneten Strukturen wie Plättchen, Waben usw.) ist der Photokatalysator als mehr oder weniger dünne Schicht auf dem ruhenden Träger fixiert.

### Der Mikroradiator MR

Der Mikroradiator MR ist ein phosphoreszierender Feststoff, der in Form von Partikeln verwendet wird. Er muss eine hinreichend lange Nachleuchtzeit (mindestens im Sekundenbereich, besser einige Minuten oder länger, vorzugsweise 5 Sekunden bis 30 Minuten) haben und in dem Wellenlängenbereich emittieren, in dem der Photokatalysator aktiviert werden kann.

### Beispiele für geeignete phosphoreszierende Feststoffe

Es sind viele phosphoreszierende Feststoffe mit Emissionen im sichtbaren Bereich bekannt, die zwar für andere Zwecke entwickelt wurden aber alle Anforderungen für die hier beschriebene Anwendung abdecken. Anstelle einer umfangreichen Aufzählung wird auf die folgenden Literaturstellen verwiesen, deren Inhalt hiermit übernommen wird
(US P 6,287,993, DE 195 21 119 A1, DE 199 26 980 A1, DE 199 34 436 A1).

Die Anwendung dieser MR erfolgt z.B. in Kombination mit dem in Lettmann, Christian: "Konventionelle und kombinatorische Entwicklung von Mischoxiden zur photokatalytischen Wasserreinigung mit sichtbarem Licht", Diss. Univ. des Saarlandes, 2001, beschriebenen Photokatalysatoren (PK).

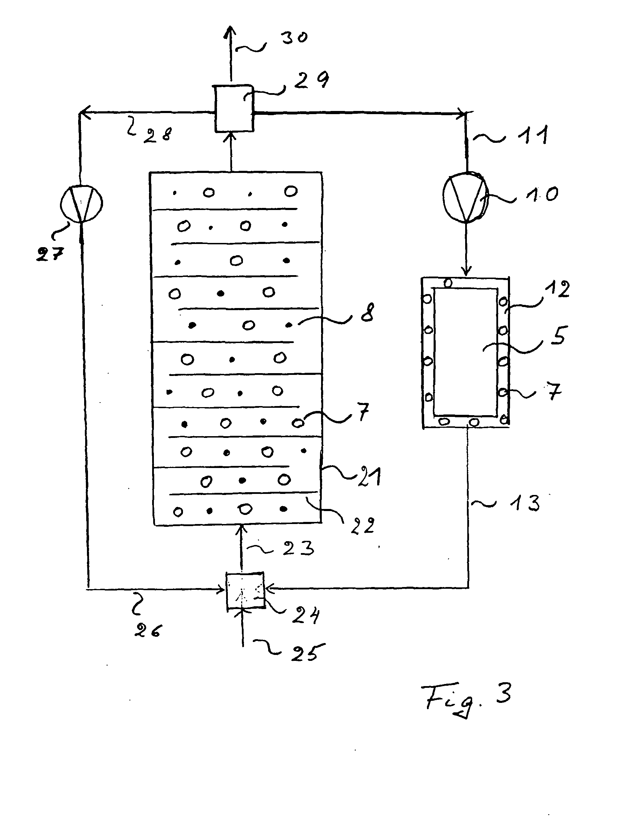

In US P 6,287,993, sind lange leuchtende phosphoreszierende Stoffe beschrieben. Unter anderem ist in Beispiel 17 mit Zink und Praseodym dotiertes Glas beschrieben, das mit einer Emission von 350 bis 450 nm geeignet ist, TiO₂ als Photokatalysator zu aktivieren (vgl. Fig. 3).

Auch in DE 195 21 119 A1, sind "langsam abklingende" phosphoreszierende Stoffe beschrieben, die als TiO₂-Aktivatoren genutzt werden können, da sie auch bei unter 400 nm emittieren. Es handelt sich dabei um Gläser, die mit seltenen Erdmetallen dotiert sind.

Im Prinzip liegt das Korngrößenspektrum der MR wie beim Photokatalysator PK zwischen 1 nm und 1 mm, vorzugsweise 1 µm - 0,5 mm, je nach Anwendung.

Eine effiziente und wirtschaftliche Lösung - bevorzugt für größere Apparate - besteht darin, dass die Partikelgröße des MR deutlich über der des PK liegt, damit ein an der Lampe "aufgeladenes" MR-Partikel möglichst viele PK-Partikeln bestrahlt. Ferner hat dies den Vorteil, dass die MR durch Filter oder Siebe leicht vom Fluid und den darin enthaltenen PK abgetrennt und einer Regenerierung zugeführt werden können.

Eine andere effiziente und wirtschaftliche Lösung - bevorzugt für kleine Apparate - besteht darin, dass die Partikelgröße des MR deutlich unter der des PK liegt, um so zu einer einfachen Auftrennung von MR und PK zu gelangen.

Prinzipiell kann aber kein Verhältnis der Partikelgrößen von PK und MR ausgeschlossen werden. Dies ergibt sich allein schon aus der Vielfalt an geeigneten Apparatetypen.

Geeignet sind massive Partikel, die sich besonders einfach herstellen lassen, aber auch solche, bei denen das phosphoreszierende Material auf einen Träger-Kern beschichtet ist. Bei Verwendung eines magnetischen Kerns eröffnen sich zusätzliche Möglichkeiten für die Abtrennung und den Transport der MR-Partikeln.

### Vermeidung von Abrieb am MR und/oder Korrosion und/oder Auflösen des MR

Zur Vermeidung von Abrieb kann der MR, wenn er nicht sowieso aus einem Glas besteht, mit einer (dünnen) Licht durchlässigen Schicht (z.B. Glas) beschichtet werden. Dies kann auch gegen Korrosion bzw. Auflösen des MR im zubehandelnden Fluid schützen.

### Abtrennung von Photokatalysator PK und Mikro-Radiatoren MR

Die Abtrennung von PK und MR (auch Abrieb!) vom Fluid kann über klassische Verfahren wie Filter, Zyklon, Zentrifuge usw. aber bei MR auch mit Magnetabscheider (siehe oben) erfolgen.

Die Auftrennung von PK und MR voneinander kann über die Partikelgröße (Filter, Zyklon) aber auch über die Dichte (Zyklon, Zentrifuge) und andere physikalische Unterschiede (z.B.: magnetischer Kern des MR; siehe oben) erfolgen.

Ein bevorzugtes Verfahren besteht darin, größere MR mittels eines Bandfilters von Fluid und PK zu trennen, die abgetrennten MR an einer energiereichen Lichtquelle zu aktivieren und vom Ende des Filterbandes wieder in das Fluid zurückzuführen.

Als Lichtquellen sind besonders UV-Strahler mit dem geeigneten Spektrum zur Anregung der Mikro-Radiator-Partikeln geeignet.

Bei externem Kreislauf ist die Lampe vorzugsweise in einem speziellen Apparat zu installieren. Dieser sorgt durch seine Führung der MR-Partikeln, dass eine möglichst effiziente Beleuchtung aller MR-Partikeln erfolgt;
zum Beispiel durch:
Bewegung der MR-Partikeln in einem engen Spalt um die Lampe.
Strömung mit gutem Partikeltransport quer zur Strömungsrichtung (z.B. in einem Wirbelbett mit eingebauten Lampen oder durch Ausprägen einer turbulenten Strömung usw.)

Vorzugsweise wird der Photokatalysator PK vom Mikro-Radiator MR vor der externen Lampe abgetrennt, um Abschattung durch die PK beim "Aufladen" des MR zu vermeiden.

Auch bei direkter Bestrahlung im Apparat ist eine (zumindest partielle) Abtrennung des PK vom MR in der Nähe des Strahlers zu bevorzugen (z.B. über die Strömungsführung oder vorgeschaltete Filter oder Magnetfelder bei Verwendung eines magnetischen Kerns des MR).

Es versteht.sich von selbst, dass dem Reaktor neben dem zu behandelnden Fluid die notwendigen Reaktanden zugeführt werden müssen. (z.B.: Zufuhr von O₂ zur Oxidation von organischen Verunreinigungen in Wasser).

Ebenso müssen meist die Reaktionsprodukte (z.B. CO₂) hinter dem Reaktor vom behandelten Fluid abgetrennt werden.

### Eignung der Problemlösungen für Medien und Reaktionen

Das erfindungsgemäße Verfahren ist für alle chemischen Reaktionen, die an photokatalytisch aktiven Oberflächen in Flüssigkeiten oder Gasen durchgeführt werden können, geeignet.

Bevorzugte Anwendung findet die Erfindung für die Oxidation von gelösten organischen Molekülen, dispergierten Tropfen und Feststoffteilchen, Mikroorganismen und Viren in Wasser und Gasen (auch Gasblasen bei Wasser).

Die Wellenlängen des Lichts zum "Aufladen" des MR und bei der Abstrahlung durch den MR müssen nicht gleich sein. Häufig ist das abgestrahlte Licht langwellig verschoben. Das vom MR abgestrahlte Licht sollte hinreichend energiereich (kurzwellig) sein, um die nötige Katalysatorenergie aufzubringen (z.B. UV-Licht).

Der Begriff " Licht" kann durch den Begriff "elektromagnetische Strahlung geeigneter Wellenlänge" ersetzt werden, gilt also auch für andere Wellenlängenbereiche bei Verwendung entsprechender Photokatalysatoren (insbesondere sichtbares Licht bzw. Sonnenlicht).

Durch die Verwendung der Mikroradiatoren MR wird eine Packungsdichte der bestrahlten Katalysatoroberfläche erreicht, wie sie mit keinem der bekannten Verfahren möglicht ist. Zudem können recht einfache ggf. bekannte Apparate verwendet werden. Sie müssen nur auf das neue Verfahren adaptiert bzw. modifiziert werden. Lediglich die Apparate, die die externen Lampen enthalten, erfordern möglicherweise Neukonstruktionen.

### Beispiel 1

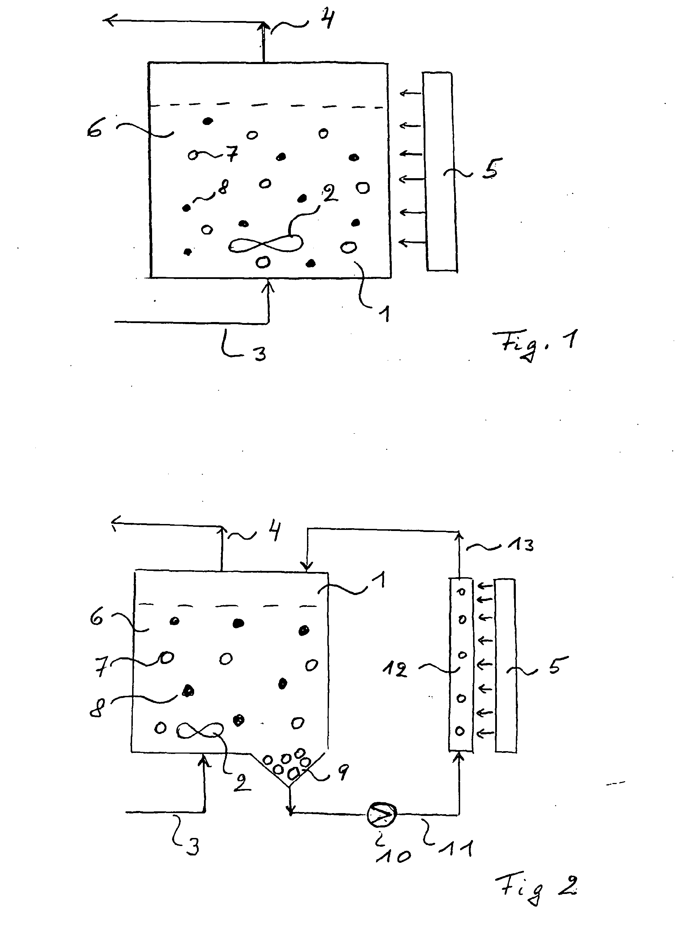

### Laborsuspensionsreaktor laut Figur 1

Der Reaktor besteht aus dem Rührgefäß 1 mit Flügelrührer 2, einer Zuleitung für Sauerstoff (Luft) 3, einer Ableitung für Abgase 4 und einer äußeren Lampe (UV-Strahler) 5 und enthält eine Suspension aus einem Reaktionsmedium 6, den als o dargestellten Mikroradiatoren 7 sowie den als • dargestellten Photokatalysatoren 8.

Die Suspension - bestehend aus 500 ml einer wässrigen Lösung eines organischen Stoffs und Photokatalysator sowie Mikro-Radiator MR in einem Reaktorvolumen von 800 ml wird ständig gerührt, wodurch sich eine, im Zentrum absteigende und an der Wandung aufsteigende umlaufende Strömung ergibt, während eine UV-Lampe (20 Watt Leistung bei 350 nm Strahlungsmaximum) seitlich einstrahlt (bestrahlte Fläche 50 cm²). So kommen alle MR-Partikel, im zeitlichen Mittel an die UV-Quelle, wo sie aktiviert werden. Luft wird in feinen Perlen durchgeleitet.

Der Zusatz an Mikro-Radiator MR erhöht die Abbaurate der organischen Komponente beträchtlich, in dem er Strahlungsenergie ins Innere des Reaktors bringt.

### Beispiel 2

### Laborsuspensionsreaktor mit externem Umlauf des Mikro-Radiators MR laut Figur 2

Der Reaktor besteht aus einem Rührgefäß 1 mit Flügelrührer 2, einer Zuleitung für Sauerstoff (Luft) 3, einer Ableitung für Abgase 4, wobei unterhalb des Rührers 2 ein Sedimentationsraum 9 vorgesehen ist, in dem sich die schwereren MR 7 sammeln, um mit wenig Fluid 6 zusammen über die Pumpe 10 und Leitung 11 in den äußeren Ringspalt 12 einer UV-Lampe 5 und nach Aktivierung über die Leitung 13 wieder von oben in den Rührbehälter 1 zurückgeführt zu werden.

Die Suspension - bestehend aus einer wässrigen Lösung einer oxidierbaren Substanz, Photokatalysator sowie Mikro-Radiator wird ständig gerührt und durch Durchleiten von Luft mit O₂ gesättigt. Der Mikro-Radiator (0 bis 10 g) wird im Sedimentationsraum ständig vom Photokatalysator abgetrennt und an einer UV-Lampe vorbei zum Laborreaktor zurückgeführt. Die Umlaufgeschwindigkeit beträgt Bspw. 5 bzw. 10ml/min. Im äußeren Kreislauf befinden sich dabei z.B. 10g bzw. bei zwei Lampen 20g zusätzliche MR zu der Menge im Rührkessel. Der Zusatz an Mikro-Radiator erhöht die Abbaurate der org. Substanz beträchtlich. Auch das Erhöhen des umlaufenden Mengenstroms erhöht die Abbaurate.

### Beispiel 3

Rohrreaktor mit Mäanderrippen und getrenntem externem Umlauf von Photokatalysator (PK) und Mikroradiatoren (MR) laut Figur 3.

Der Reaktor besteht aus einem Rohrreaktor 21 mit eingebauten mäanderförmit angeordneten, horizontalen Rippen 22, dem von unten über die Leitung 23 aus dem Mischer 24 ein Gemisch bestehend aus: Reaktionslösung 6, die mit Sauerstoff angereichert ist und dem Mischer über die Leitung 25 zugeführt wird, Photokatalysator 8, der über die Pumpe 27 und Leitung 26 / 28 im Kreislauf geführt wird und Mikroradiatoren 7, die über die Leitungen 11 und 13, die Pumpe 10 und den die UV-Lampe 5 umgebenden Ringmantel 12 im Kreislauf geführt werden, zugeführt wird, welches den Reaktor über den Separator 29 verläßt, wo es in die Komponenten getrennt wird. Die ausreagierte Reaktionslösung sowie gebildete Abgase werden über die Leitung 30 abgeführt.

### Beispiel 4

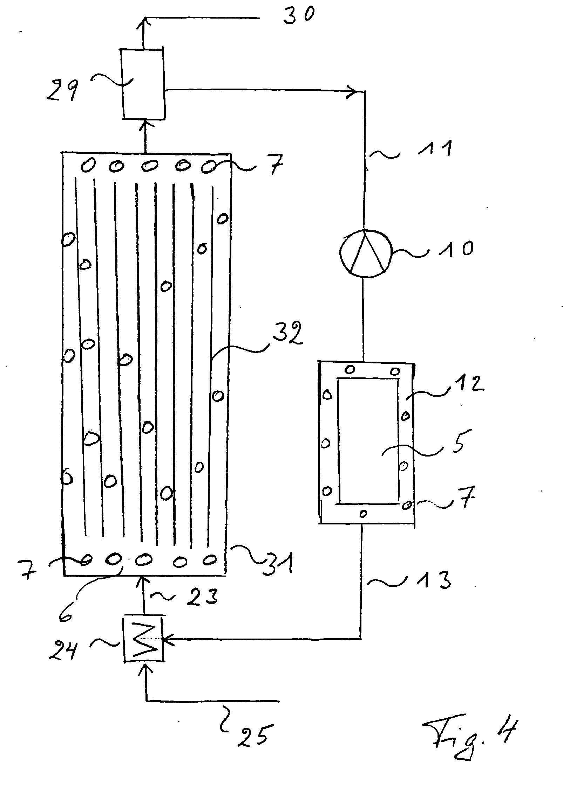

Rohrreaktor mit Photokatalysator beschichteten Wabeneinbauten und externer Aktivierung laut Figur 4.

Der Reaktor besteht aus dem rohrförmigen Reaktorgehäuse 1 mit Wabeneinbauten 32 in Richtung des Rohres, die mit Photokatalysator beschichtet sind. Reaktionslösung 6 aus der Zuführungsleitung 25 und aktivierte Mikroradiatoren 7 aus der Kreislaufleitung 13 werden über den Mischer 24 und Leitung 23 in den Reaktor eingeführt, passieren die Wabeneinbauten 32 und geben dabei ihre Photoenergie an die PK ab, bevor sie im Separator 29 von der Lösung 6 getrennt werden und über Leitung 11 und Pumpe 10 in den Ringmantel 12 der Lampe 5 geführt werden, wo sie mit UV-Licht aktiviert und über die Leitung 13 wieder in den Reaktor zurückgeführt werden.

## Patentansprüche

1. Reaktor zur Durchführung photokatalysierter Reaktionen in flüssigen oder gasförmigen Reaktionsmedien bestehend aus einem Reaktorbehälter mit festen Photokatalysatoren, Zu- und Abführungsleitungen, Mischvorrichtungen und einer Vorrichtung zum Zuführen von elektromagnetischer Strahlung, **dadurch gekennzeichnet, dass** phosphoreszierende Partikel enthalten sind, welche die elektromagnetische Strahlungen zur Strahlungsquelle absorbieren und im Reaktorinneren zeitlich verzögert Licht abstrahlen, welches die Photokatalysatoren anregt.

2. Reaktor nach Anspruch 1, **dadurch gekennzeichnet, dass** die Strahlungsquelle an einer strahlungsdurchlässigen Wand oder im Inneren des Reaktorbehälters angebracht ist und die Mischvorrichtung geeignet ist, die phosphoreszierenden Partikel aus dem Inneren des Reaktorbehälters an die Strahlungsquelle und zurück zu befördern.

3. Reaktor nach Anspruch 1, **dadurch gekennzeichnet, dass** die Vorrichtung zum Zuführen von elektromagnetischer Strahlung aus einer Lampe und einem Flüssigkeitskanal besteht, welcher über Transportleitungen und Fördereinrichtungen für die phosphoreszierenden Partikel mit dem Reaktorbehälter verbunden ist.

4. Reaktor nach Anspruch 3, **dadurch gekennzeichnet, dass** die Lampe stabförmig ausgebildet ist und von dem Flüssigkeitskanal mantelförmig umgeben ist.

5. Reaktor nach Anspruch 3 oder 4, **dadurch gekennzeichnet, dass** der Reaktorbehälter mit einer Vorrichtung zur Separierung der phosphoreszierenden Partikel von den Photokatalysatoren und/oder dem Reaktionsmedium versehen ist.

6. Reaktor nach den Ansprüchen 1 bis 5, zur Oxidation von organischen Verunreinigungen in Wasser oder Abwasser, **dadurch gekennzeichnet, dass** Zuleitungen für Luft oder Sauerstoff und Ableitungen für die Abgase vorgesehen sind.

7. Reaktor nach den Ansprüchen 1 bis 6, **dadurch gekennzeichnet dass** der Reaktorbehälter ein Wirbelreaktor, ein Durchfluss- oder Rohrreaktor, ein Festbettreaktor oder ein Rührkesselreaktor ist.

8. Reaktor nach den Ansprüchen 1 bis 7, **dadurch gekennzeichnet, dass** die Photokatalysatoren einen Partikeldurchmesser von 1 nm bis 100 µm in Suspensionsreaktoren oder 1 µm bis 1 mm in Wirbelbettreaktoren oder Festbettreaktoren aufweisen.

9. Reaktor nach den Ansprüchen 1 bis 8, **dadurch gekennzeichnet, dass** die phosphoreszierenden Partikel eine Phosphoreszenzhalbwertzeit von 5 Sekunden bis 30 Minuten aufweisen und eine Korngröße von 1 nm bis 1 mm, vorzugsweise 10 µm bis 0,5 mm besitzen.

10. Verfahren zum Durchführen photokatalytischer Reaktionen, **dadurch gekennzeichnet, dass** feste Photokatalysatoren in einem flüssigen oder gasförmigen Reaktionsmedium suspendiert oder auf einer Oberfläche aufgezogen sind und mittels phosphoreszierenden Partikeln, die an einer elektromagnetischen Strahlungsquelle aufgeladen sind und diese Energie zeitlich verzögert abstrahlen, aktiviert werden.

11. Verfahren nach Anspruch 10, **dadurch gekennzeichnet, dass** die phosphoreszierenden Partikel nach Aktivierung des Photokatalysators durch Abgabe der Energie wieder an der Strahlungsquelle vorbeigeleitet und erneut aufgeladen werden.

12. Verfahren nach Anspruch 11, **dadurch gekennzeichnet, dass** die phosphoreszierenden Partikel von den Photokatalysatoren und/oder dem Reaktionsmedium separiert werden, bevor sie zu einer separaten Strahlungsquelle geführt und aktiviert werden, um anschließend wieder in das Reaktionsmedium zurückgeführt zu werden.

13. Verfahren nach den Ansprüchen 10 bis 12, **dadurch gekennzeichnet, dass** die photokatalytische Reaktion eine Oxidation organischer Verbindungen in wässriger Lösung ist.

14. Verfahren nach den Ansprüchen 10 bis 13, **dadurch gekennzeichnet, dass** der Katalysator TiO₂-Körner und die phosphoreszierenden Partikel Glaspartikel sind, die mit seltenen Erden dotiert sind und die mit UV-Licht oder sichtbarem Licht angeregt werden können.

## Claims

1. Reactor for carrying out photocatalysed reactions in liquid or gaseous reaction media comprising a reactor vessel with a solid photocatalyst, feed lines and take-off lines, mixing means, and a means of supplying electromagnetic radiation, **characterised in that** phosphorescent particles are present which absorb the supplied electromagnetic radiation and, with a time delay, emit light which excites the photocatalyst.

2. Reactor according to claim 1, **characterised in that** the means of supplying electromagnetic radiation is mounted on a radiation-transparent wall or in the interior of the reactor vessel and the mixing means is suitable for conveying the phosphorescent particles from the interior of the reactor vessel to the radiation source and back.

3. Reactor according to claim 1, **characterised in that** the means of supplying electromagnetic radiation is composed of a lamp and a fluid channel which communicates with the reactor vessel via transport lines and conveying means for the phosphorescent particles.

4. Reactor according to claim 3, **characterised in that** the lamp is of rod-shaped design and is surrounded by the fluid channel in the form of a jacket.

5. Reactor according to claim 3 or 4, **characterised in that** the reactor vessel is provided with means for separating the phosphorescent particles from the photocatalyst and/or from the reaction medium.

6. Reactor according to claims 1 to 5, suitable for the oxidation of organic impurities in water or wastewater, **characterised in that** feed lines are provided for air or oxygen and exhaust lines for the waste gases.

7. Reactor according to claims 1 to 6, **characterised in that** the reactor vessel is a fluidized bed reactor, a continuous-flow or tube reactor, a fixed bed reactor or a stirred tank reactor.

8. Reactor according to claims 1 to 7, **characterised in that** the photocatalyst has a particle diameter of from 1 nm to 100 µm in suspension reactors or from 1 µm to 1 mm in fluidized-bed reactors or fixed-bed reactors.

9. Reactor according to claims 1 to 8, **characterised in that** the phosphorescent particles have a phosphorescence half-life of from 5 seconds to 30 minutes and a particle size of from 1 nm to 1 mm, preferably of from 10 µm to 0.5 mm.

10. Process for carrying out photocatalytic reactions, **characterised in that** solid photocatalysts are suspended in a liquid or gaseous reaction medium or applied to a surface and are activated by phosphorescent particles which are charged up at an electromagnetic radiation source and which emit this energy with a time delay.

11. Process according to claim 10, **characterised in that** after emitting their energy the phosphorescent particles are conveyed past the radiation source again and recharged.

12. Process according to claim 11, **characterised in that** the phosphorescent particles are separated from the photocatalysts and/or from the reaction medium before being passed to a separate radiation source and activated, before being then passed back into the reaction medium.

13. Process according to claims 10 to 12, **characterised in that** the photocatalytic reaction is an oxidation of organic compounds in aqueous solution.

14. Process according to claims 10 to 13, **characterised in that** the catalyst is TiO₂ particles and the phosphorescent particles are glass particles which have been doped with rare earth elements and can be excited with UV light or visible light.

## Revendications

1. Réacteur pour la mise en oeuvre de réactions photocatalysées dans des milieux réactionnels liquides ou gazeux, constitué par un récipient faisant office de réacteur comportant des photocatalyseurs solides, des conduits d'alimentation et d'évacuation, des dispositifs de mélange et par un dispositif pour acheminer un rayonnement électromagnétique, **caractérisé en ce qu'**il contient des particules phosphorescentes qui absorbent les rayonnements électromagnétiques en direction d'une source de rayonnement et émettent de la lumière en différé à l'intérieur du réacteur, qui excite les photocatalyseurs.

2. Réacteur selon la revendication 1, **caractérisé en ce que** la source de rayonnement est appliquée contre une paroi perméable au rayonnement ou à l'intérieur du récipient faisant office de réacteur et le dispositif de mélange est approprié pour transporter les particules phosphorescentes depuis l'intérieur du récipient faisant office de réacteur jusque contre la source de rayonnement et vice versa.

3. Réacteur selon la revendication 1, **caractérisé en ce que** le dispositif pour acheminer le rayonnement électromagnétique est constitué d'une lampe et d'un canal pour le liquide qui est relié au récipient faisant office de réacteur via des conduits de transport et des mécanismes d'acheminement pour les particules phosphorescentes.

4. Réacteur selon la revendication 3, **caractérisé en ce que** la lampe est réalisée en forme de barre et est entourée à la manière d'une enveloppe par le canal destiné au liquide.

5. Réacteur selon la revendication 3 ou 4, **caractérisé en ce que** le récipient faisant office de réacteur est muni d'un dispositif pour séparer les particules phosphorescentes des photocatalyseurs et/ou du milieu réactionnel.

6. Réacteur selon l'une quelconque des revendications 1 à 5, pour l'oxydation d'impuretés organiques dans de l'eau ou dans des eaux usées, **caractérisé en ce qu'**on prévoit des conduits d'amenée pour l'air ou pour l'oxygène et des conduits d'évacuation pour les gaz d'échappement.

7. Réacteur selon l'une quelconque des revendications 1 à 6, **caractérisé en ce que** le récipient faisant office de réacteur est un réacteur à lit fluidisé, un réacteur à écoulement ou un réacteur tubulaire, un réacteur à lit fixe ou un réacteur à cuve d'agitation.

8. Réacteur selon l'une quelconque des revendications 1 à 7, **caractérisé en ce que** les photocatalyseurs présentent un diamètre de particules de 1 nm à 100 µm dans des réacteurs de mise en suspension ou de 1 µm à 1 mm dans des réacteurs à lit fluidisé ou dans des réacteurs à lit fixe.

9. Réacteur selon l'une quelconque des revendications 1 à 8, **caractérisé en ce que** les particules phosphorescentes présentent un temps de demi-vie de phosphorescence de 5 secondes à 30 minutes et une granulométrie de 1 nm à 1 mm, de préférence de 10 µm à 0,5 mm.

10. Procédé pour la mise en oeuvre de réactions photocatalytiques, **caractérisé en ce qu'**on met des photocatalyseurs solides en suspension dans un milieu réactionnel liquide ou gazeux ou bien on les monte sur une surface et on les active au moyen de particules phosphorescentes qui tirent leur charge d'une source de rayonnement électromagnétique et qui émettent cette énergie en différé.

11. Procédé selon la revendication 10, **caractérisé en ce qu'**on guide les particules phosphorescentes, après activation du photocatalyseur par émission de l'énergie, à nouveau le long de la source de rayonnement et on les recharge.

12. Procédé selon la revendication 11, **caractérisé en ce que** les particules phosphorescentes sont séparées des photocatalyseurs et/ou du milieu réactionnel avant de les guider vers une source de rayonnement séparé et avant de les activer, pour ensuite les recirculer dans le milieu réactionnel.

13. Procédé selon les revendications 10 à 12, **caractérisé en ce que** la réaction photocatalytique est une oxydation de composés organiques dans une solution aqueuse.

14. Procédé selon les revendications 10 à 13, **caractérisé en ce que** le catalyseur représente des grains de TiO₂ et les particules phosphorescentes sont des particules de verre qui sont dopées avec des terres rares et que l'on peut exciter avec de la lumière ultraviolette ou avec de la lumière visible.
